# EUROPEAN PATENT SPECIFICATION

(11) **EP 3 933 546 B1**
(45) Date of publication and mention of the grant of the patent: **02.10.2024**
(21) Application number: 21751050.2
(22) Date of filing: 20.01.2021
(51) Int. Cl.: G06F 1/16

(54) **ELECTRONIC DEVICE COMPRISING SUPPORT MEMBER**
ELEKTRONISCHE VORRICHTUNG MIT TRÄGERELEMENT
DISPOSITIF ÉLECTRONIQUE COMPRENANT UN ÉLÉMENT DE SUPPORT

(30) Priority: 05.02.2020 KR 20200013948
(43) Date of publication of application: 05.01.2022
(73) Proprietor: Samsung Electronics Co., Ltd., Suwon-si, Gyeonggi-do 16677 (KR)
(72) Inventor: LIM, Hyungseok, Suwon-si, Gyeonggi-do 16677 (KR); KIM, Jingook, Suwon-si, Gyeonggi-do 16677 (KR); SHIM, Heebo, Suwon-si, Gyeonggi-do 16677 (KR); JEONG, Seongki, Suwon-si, Gyeonggi-do 16677 (KR); CHOI, Seungwhee, Suwon-si, Gyeonggi-do 16677 (KR)
(74) Representative: Gulde & Partner
(86) International application number: PCT/KR2021/000773
(87) International publication number: WO 2021/157912

(56) References cited:
- EP-A1- 3 388 977
- KR-A- 20140 139 515
- KR-A- 20150 088 658
- KR-A- 20160 061 064
- KR-A- 20170 049 280
- US-A1- 2018 067 245
- US-A1- 2018 364 869

## Description

### [Technical Field]

Various embodiments of the disclosure relate to an electronic device including a supporting member.

### [Background Art]

Advancing information communication and semiconductor technologies accelerate the spread and use of various electronic devices. In particular, recent electronic devices are being developed to carry out communication while carried on.

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, electronic devices may output stored information as voices or images. As electronic devices are highly integrated, and high-speed, high-volume wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function for mobile banking, and a scheduling or e-wallet function. Such electronic devices become compact enough for users to carry in a convenient way.

As mobile communication services extend up to multimedia service sectors, the display of the electronic device may be increased to allow the user satisfactory use of multimedia services as well as voice call or text messaging services. Accordingly, a foldable flexible display may be disposed on the entire area of the housing structure separated to be foldable.

The following publications are related to electronic devices having a display and a biometric sensor:
- EP 3 388 977 A1 entitled "Biometric sensor and device including the same"; and
- US 2018/0364869 A1 entitled "Electronic device including light emitting module and light receiving module adjacent to display, and operating method thereof.

### [Detailed Description of the Invention]

### [Technical Problem]

There is increasing demand for electronic devices including a flexible display that may be folded over an entire area of the housing structure. Accordingly, the cover window for protecting the display panel may also be formed of a flexible material that may be folded over the entire area. However, it is difficult for the flexible cover window to protect the display panel from external force applied to the electronic device. The display area with an opening adjacent to a sensor may be vulnerable to impact or damage.

According to various embodiments of the disclosure, it is possible to provide an electronic device that prevents a display from sagging.

### [Technical Solution]

According to various embodiments of the disclosure, an electronic device is provided as defined in the appended claims.

### [Advantageous Effects]

In the electronic device according to various embodiments of the present disclosure, it is possible to prevent damage to the display due to external force by reducing sagging of the display using a supporting member with an opening corresponding to a through hole of the display.

### [Brief Description of Drawings]

FIG. 1 is a block diagram illustrating an electronic device in a network environment according to various embodiments of the disclosure;
FIG. 2 is a front perspective view illustrating an electronic device according to various embodiments of the disclosure;
FIG. 3 is a rear view illustrating an electronic device according to various embodiments of the disclosure;
FIG. 4 is an exploded perspective view illustrating an electronic device according to various embodiments of the disclosure;
FIG. 5 is a front view illustrating an electronic device according to various embodiments of the disclosure;
FIG. 6A is a front view illustrating a flexible display according to various embodiments of the disclosure;
FIG. 6B is a rear view illustrating a flexible display according to various embodiments of the disclosure;
FIG. 7 is a cross-sectional view taken along line A-A' of FIG. 5;
FIGS. 8A and 8B are a front view and a rear view illustrating a supporting member according to various embodiments of the disclosure;
FIG. 9 is a cross-sectional view taken along line A-A' of FIG. 5; and
FIG. 10 is another front view illustrating an electronic device according to various embodiments of the disclosure.
FIG. 11 is a cross-sectional view taken along line B-B' of FIG. 10.

### [Mode for Carrying out the Invention]

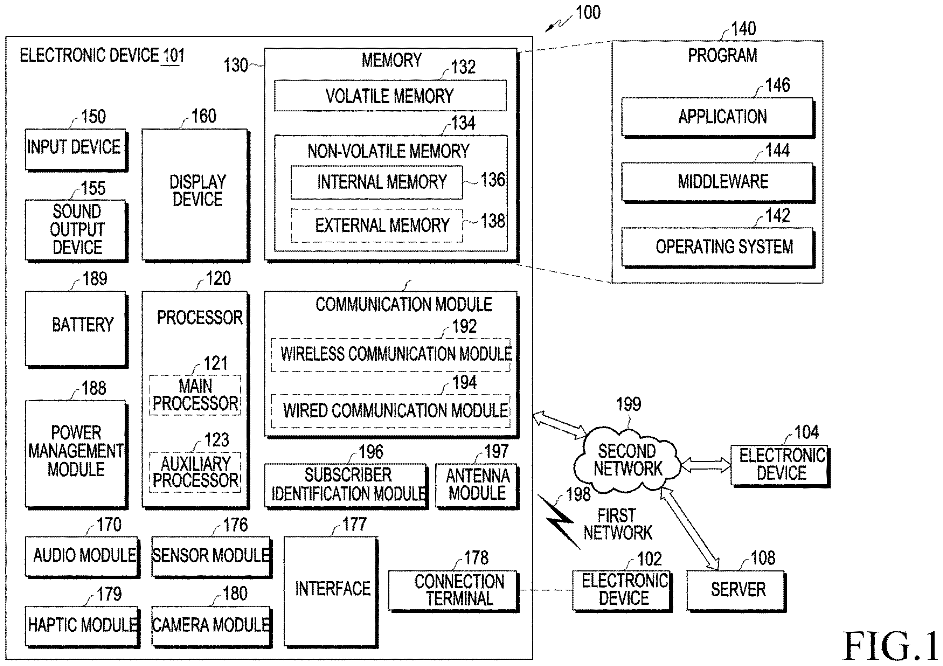

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output unit 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output unit 155 may output sound signals to the outside of the electronic device 101. The sound output unit 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output unit 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device). According to an embodiment, the antenna module may include one antenna including a radiator formed of a conductor or conductive pattern formed on a substrate (e.g., a printed circuit board (PCB)). According to an embodiment, the antenna module 197 may include a plurality of antennas. In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102 and 104 or server 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

The electronic device according to various embodiments may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

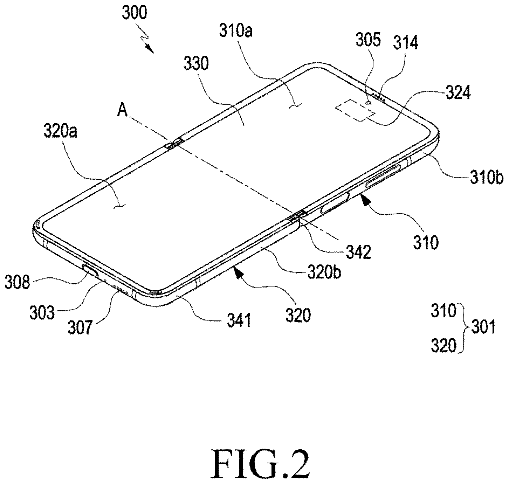

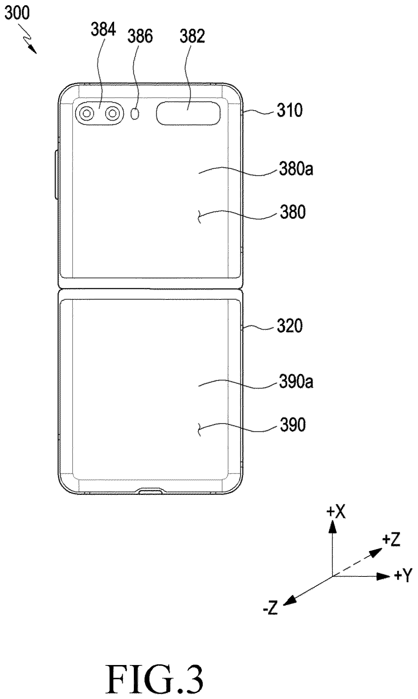

FIG. 2 is a front perspective view illustrating an electronic device according to various embodiments of the disclosure; FIG. 3 is a rear view illustrating an electronic device according to various embodiments of the disclosure. The configuration of the electronic device 300 of FIGS. 2 and 3 may be identical in whole or part to the configuration of the electronic device 101 of FIG. 1.

Referring to FIGS. 2 and 3, the electronic device 300 may include a housing 301. According to an embodiment, the housing 301 may be a structure that forms part of an outer surface of the electronic device 300. According to an embodiment, the surface where the display 330 is exposed may be defined as a front surface of the electronic device 300, and the opposite surface of the front surface may be defined as a rear surface of the electronic device 300. The surface surrounding the space between the front and rear surfaces may be defined as a side surface of the electronic device 300.

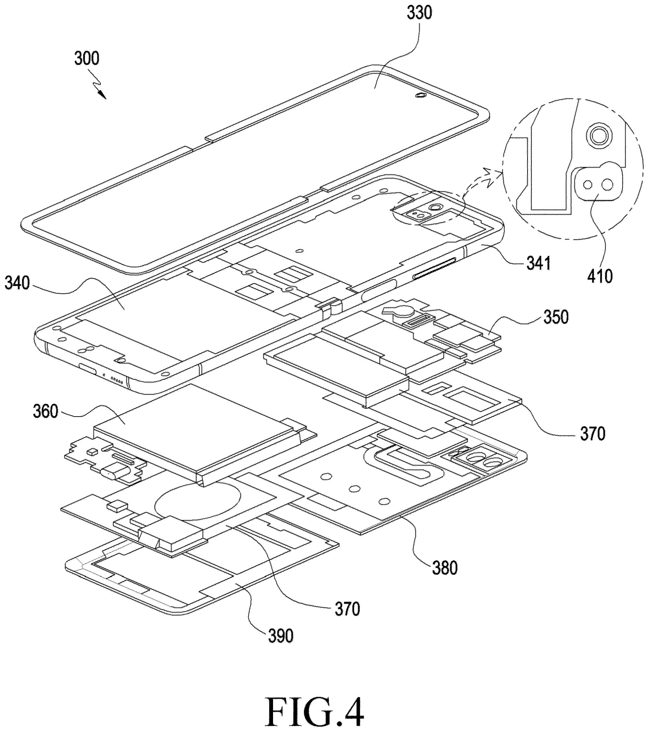

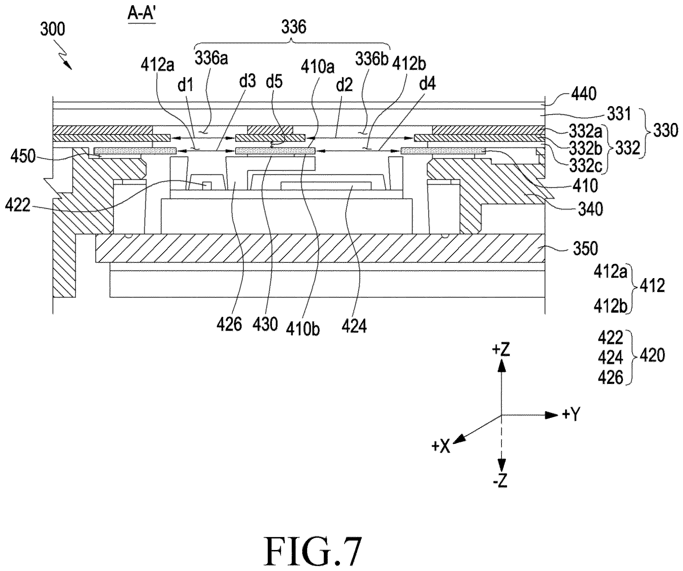

According to various embodiments, the electronic device 300 may include a housing 301 including a first front surface 310a, a first rear surface 380a, a first side surface 310b surrounding a space between the first front surface 310a and the first rear surface 380a, a second front surface 320a, a second rear surface 390a, and a second side surface 320b surrounding a space between the second front surface 320a and the second rear surface 390a. According to an embodiment, the first front surface 310a and the second front surface 320a may be at least partially formed of a substantially transparent cover window (e.g., the cover window 440 of FIG. 7). The first rear surface 380a and the second rear surface 390a may be formed of a rear plate (e.g., the first rear cover 380 and the second rear cover 390 of FIG. 4). The rear plate may be formed of, e.g., laminated or colored glass, ceramic, polymer, metal (e.g., aluminum, stainless steel (STS), or magnesium), or a combination of at least two thereof. According to an embodiment, the first side surface 310b and the second side surface 320b may be coupled with the cover window 440 or the rear plate, and may be formed of a side bezel structure (or "side member") 341 including a metal and/or a polymer.

According to various embodiments, the housing 301 may include a first housing structure 310, a second housing structure 320, a hinge structure 342, a first rear cover 380, and a second rear cover 390. The housing 301 of the electronic device 300 are not limited to the shape and coupling shown in FIGS. 2 and 3 but may rather be implemented in other shapes or via a combination and/or coupling of other components. For example, the first housing structure 310 and the first rear cover 380 may be integrally formed with each other, and the second housing structure 320 and the second rear cover 390 may be integrally formed with each other. In some embodiments, at least one of the first rear cover 380 or the second rear cover 390 may be integrally formed with the side bezel structure 341 and may include the same material (e.g., ceramic).

According to various embodiments, the first housing structure 310 may be connected to the hinge structure 342 and may include a first surface 310a facing in a first direction. The second housing structure 320 may be connected to the hinge structure 342, include a third surface 320a facing in a third direction, and rotate about a first axis (axis A) from the first housing structure 310.

According to various embodiments, the electronic device 300 may switch to a folded state or an unfolded state. According to an embodiment, the electronic device 300 may be provided to the user in a folded state in which the first surface faces the third surface. According to another embodiment, the electronic device 300 may be provided to the user in an unfolded state in which the third direction is substantially the same as the first direction. According to another embodiment, the electronic device 300 may be provided to the user in a partially folded intermediate state in which the first direction and the third direction meet.

According to various embodiments, the first housing structure 310 and the second housing structure 320 may be disposed on both sides of the folding axis A, and may have an overall symmetrical shape with respect to the folding axis A. As is described below, the angle or distance between the first housing structure 310 and the second housing structure 320 may be varied depending on whether the electronic device 300 is in the unfolded state, the folded state, or the partially unfolded intermediate state. According to an embodiment, the first housing structure 310 may further include a sensor area 324 in which various sensors may be disposed.

According to various embodiments, at least a portion of the first housing structure 310 and the second housing structure 320 may be formed of a metal or a nonmetal material having a predetermined degree of rigidity to support the display 330. At least a portion formed of metal may provide a ground plane of the electronic device 300 and may be electrically connected with a ground line formed on a printed circuit board (e.g., the printed circuit board 350 of FIG. 4).

According to various embodiments, the sensor area 324 may be formed in at least a partial area of the first housing structure 310. However, the placement, shape, or size of the sensor area 324 is not limited to those illustrated. For example, in another embodiment, the sensor area 324 may be provided in a different corner of the second housing structure 320 or in any area between the top corner and the bottom corner. According to an embodiment, components for performing various functions, embedded in the electronic device 300, may be exposed through the sensor area 324 or one or more openings in the sensor area 324 to the front surface of the electronic device 300. In various embodiments, the components may include various kinds of sensors. The sensor may include at least one of, e.g., a front-facing camera, a receiver, or a proximity sensor.

According to various embodiments, the electronic device 300 may include at least one or more of a display 330, audio modules 303, 307, and 314, camera modules 305 and 384, and a connector hole 308. According to an embodiment, the electronic device 300 may exclude at least one (e.g., the connector hole 308) of the components or may add other components. For example, the electronic device 300 may include a key input device.

The display 330 may be viewed from the outside of the electronic device 300 through, e.g., a cover window (e.g., the cover window 440 of FIG. 7). In an embodiment, to expand an area to which the display 330 is exposed, the edge of the display 330 may be formed to be substantially the same as an adjacent outer shape of the cover window 440. In another embodiment, a recess or opening may be formed in a portion of the screen display area of the display 330, and the electronic device 300 may include at least one or more of the camera module 305 and a sensor module (not shown) aligned with the recess or the opening. According to another embodiment (not shown), at least one of the audio module 314, sensor module (not shown), camera module 305, and light emitting device (not shown) may be included on the rear surface of the screen display area of the display 330. According to an embodiment (not shown), the display 330 may be disposed to be coupled with, or adjacent, a touch detecting circuit, a pressure sensor capable of measuring the strength (pressure) of touches, and/or a digitizer for detecting a magnetic field-type stylus pen.

According to various embodiments, the audio modules 303, 307, and 314 may include, e.g., a microphone hole 303 and speaker holes 307 and 314. The microphone hole 303 may have a microphone inside to obtain external sounds. According to an embodiment, there may be a plurality of microphones to be able to detect the direction of a sound. The speaker holes 307 and 314 may include an external speaker hole 307 and a phone receiver hole 314. According to an embodiment, the speaker holes 307 and 314 and the microphone hole 303 may be implemented as a single hole, or speakers may be rested without the speaker holes 307 and 314 (e.g., piezo speakers).

According to various embodiment, the sensor modules (not shown) may generate an electrical signal or data value corresponding to an internal operating state or external environmental state of the electronic device 300. According to an embodiment, the sensor module may be disposed inside the sensor area 324 of the first housing structure 310. The sensor module may include at least one of a proximity sensor, a fingerprint sensor, an HRM sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor. According to another embodiment, the sensor module may be exposed to the outside of the electronic device 300.

According to various embodiments, the camera modules 305 and 384 may include, e.g., a first camera module 305 disposed on the first front surface 310a of the electronic device 300 and a second camera module 384 disposed on the first rear surface 380a. The camera modules 305 and 312 may include one or more lenses, an image sensor, and/or an image signal processor. According to an embodiment, the second camera module 384 may include a flash 386 including a light emitting diode or a xenon lamp. According to an embodiment, two or more lenses (an infrared (IR) camera, a wide-angle lens, and a telescopic lens) and image sensors may be disposed on one surface of the electronic device 300.

According to various embodiments, the electronic device 300 may be connected to an external electronic device through the connector hole 308. According to an embodiment, the electronic device 300 may transmit/receive power and/or data to and from an external electronic device through the connector hole 308 functioning as a USB connector. According to another embodiment, the electronic device 300 may transmit/receive audio signals to and from an external electronic device through the connector hole 308 functioning as an earphone jack.

According to various embodiments, the electronic device 300 may include a rear display 382. The rear display 382 may be disposed on at least one of the first rear cover 380 and the second rear cover 390. The rear display 382 may face in a second direction (-Z direction) opposite to the first direction (+Z direction) in which the display 330 faces. According to an embodiment, the configuration of the rear display 382 may be identical in whole or part to the configuration of the display device (e.g., the display device 160 of FIG. 1).

Referring to FIG. 4, the electronic device 300 may include a display 330, a printed circuit board 350, a battery 360, a rear case 370, a first rear cover 380, and a second rear cover 390. The configuration of the electronic device 300, the display 330, the front case 340, the first rear cover 380, and the second rear cover 390 of FIG. 4 may be identical in whole or part to the configuration of the electronic device 300, the display 330, the first rear cover 380, and the second rear cover 390 of FIG. 2 or 3.

According to various embodiments, the front case 340 may be disposed inside the electronic device 300 and may be connected with the side bezel structure 341 or integrated with the side bezel structure 341. The front case 340 may be formed of, e.g., a metal and/or non-metallic material (e.g., polymer). The display 330 may be joined onto one surface of the front case 340, and the printed circuit board 350 may be joined onto the opposite surface. According to an embodiment, the front case 340 may be at least a portion of the first housing structure 310 or the second housing structure 320.

According to various embodiments, a camera module (e.g., the camera module 305 of FIG. 2) and a supporting member 410 may be disposed on the front case 340. The camera module 305 may be exposed to the outside of the electronic device 300 through the opening or recess formed in the display 330. The supporting member 410 may face one surface of the display 330.

According to various embodiments, a processor, a memory, and/or an interface may be mounted on the printed circuit board 350. The processor may include one or more of, e.g., a central processing unit, an application processor, a graphic processing device, an image signal processing, a sensor hub processor, or a communication processor. The memory may include a volatile or non-volatile memory. The interface may include, e.g., a high definition multimedia interface (HDMI), a universal serial bus (USB) interface, a secure digital (SD) card interface, and/or an audio interface. The interface may electrically or physically connect, e.g., the electronic device 300 with an external electronic device and may include a USB connector, an SD card/multimedia card (MMC) connector, or an audio connector.

According to various embodiments, the battery 360 may be a device for supplying power to at least one component of the electronic device 300. The battery 189 may include a primary cell which is not rechargeable, a secondary cell which is rechargeable, or a fuel cell. At least a portion of the battery 360 may be disposed on substantially the same plane as the printed circuit board 350. The battery 360 may be integrally or detachably disposed inside the electronic device 300.

According to various embodiments, the rear case 370 may be disposed under the printed circuit board 350. According to an embodiment, the rear case 370 may include a surface to which at least one of the printed circuit board 350 or the battery 360 is coupled. According to another embodiment, the rear case 370 may include the opposite surface to which the antenna is coupled. The antenna may be disposed between the first rear cover 380 and the battery 360. The antenna may include, e.g., a near-field communication (NFC) antenna, a wireless charging antenna, and/or a magnetic secure transmission (MST) antenna. The antenna may perform short-range communication with, e.g., an external device or may wirelessly transmit or receive power necessary for charging. According to another embodiment, an antenna structure may be formed of a portion or combination of the side bezel structure 341 and/or the front case 340.

According to various embodiments, the first rear cover 380 and the second rear cover 390 may form a part of the exterior of the electronic device 300. For example, the first rear cover 380 and the second rear cover 390 may be disposed under the rear case 370. According to an embodiment, the first rear cover 380 may be disposed under the first housing structure 310, and the second rear cover 390 may be disposed under the second housing structure 320.

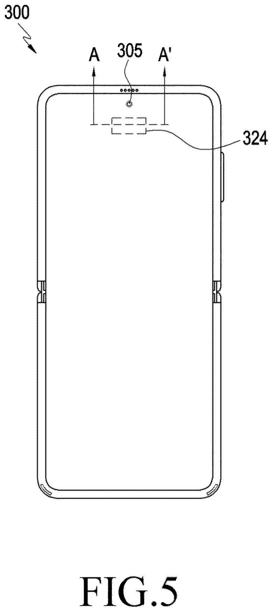

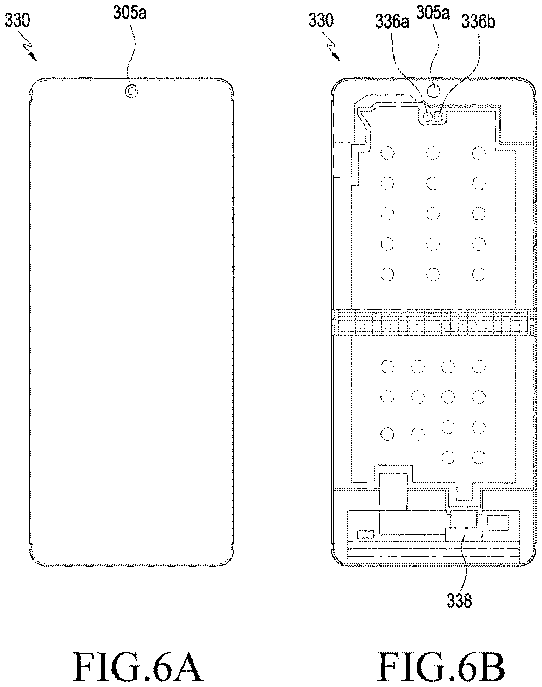

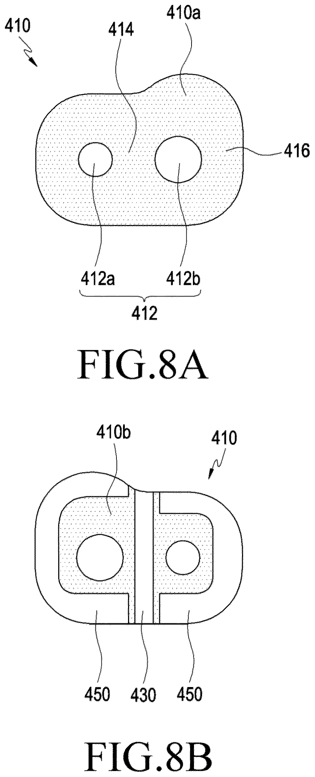

FIG. 5 is a front view illustrating an electronic device according to various embodiments of the disclosure. FIG. 6A is a front view illustrating a display according to various embodiments of the disclosure. FIG. 6B is a rear view illustrating a display according to various embodiments of the disclosure. FIG. 7 is a cross-sectional view taken along line A-A' of FIG. 5. FIG. 8A is a front view illustrating a supporting member according to various embodiments of the disclosure. FIG. 8B is a rear view illustrating a supporting member according to various embodiments of the disclosure.

Referring to FIGS. 5, 6A, 6B, 7, 8A, and 8B, the electronic device 300 includes a display 330, a supporting member 410, and a sensor module 420. The configuration of the display 330 and the sensor module 420 of FIGS. 5, 6A, 6B, 7, 8A, and 8B may be identical in whole or part to the configuration of the display device 160 and the sensor module 176 of FIG. 1.

According to various embodiments, the display 330 is formed to be flexible. For example, the display 330 may be formed as a flexible display foldable in the entire area to be folded by the rotation of the hinge structure (e.g., the hinge structure 342 of FIG. 2).

According to various embodiments, the flexible display 330 includes a display panel 331 and a display substrate 332. According to an embodiment, the display panel 331 may be formed of at least one substantially flat layer. For example, the display panel 331 may include at least one of a pixel layer for providing various images to the user or a touch sensing circuit layer for sensing the user's input. The display 330 may be electrically connected to a printed circuit board (e.g., the printed circuit board 350 of FIG. 4) through a connection part 338. According to an embodiment, the display panel 331 may include at least one panel layer, and the display substrate 332 may include at least one protection layer.

According to various embodiments, the display 330 may include a recess or an opening. For example, the display 330 includes a camera opening 305a corresponding to the camera module 305. According to an embodiment, the camera opening 305a may be formed in the display substrate 332. According to another embodiment, the camera opening 305a may be formed in the display panel 331 and the display substrate 332.

According to various embodiments, the display substrate 332 may include various layers for the function of the display 330. For example, the display substrate 332 may include an adhesive layer 332a, a display supporting layer 332b, and a display heat dissipation layer 332c. According to an embodiment, the display substrate 332 may be coupled to the display panel 331 through the adhesive layer 332a. According to an embodiment, the display supporting layer 332b may be disposed under the flexible display panel 331, and the display supporting layer 332b may planarize the display panel 331. According to an embodiment, the display heat dissipation layer 332c may dissipate the heat generated from the display panel 331. The configuration of the display substrate 332 is not limited to the adhesive layer 332a, the display supporting layer 332b, and the display heat dissipation layer 332c. For example, the display substrate 332 may further include a cushion layer (not shown) for absorbing external pressure applied to the electronic device 300.

According to various embodiments, the display substrate 332 may include a through hole 336. The through hole 336 may be formed in various positions. For example, the through hole 336 may be formed in a position corresponding to the sensor module 420 to form a path of light emitted from the sensor module 420. According to an embodiment, when the display substrate 332 is viewed from thereabove, the through hole 336 and the sensor module 420 may at least partially overlap. According to an embodiment, the through hole 336 may be formed through a portion of the display 330. For example, the through hole 336 may be formed through at least a portion of the display substrate 332.

According to the claimed embodiment, there are a plurality of through holes 336. For example, the through hole 336 includes a first through hole 336a formed to correspond to the light emitting unit 422 and a second through hole 336b formed to correspond to the light receiving unit 424. According to an embodiment, the second through hole 336b may be larger than the first through hole 336a. For example, the diameter d2 of the second through hole 336b may be greater than the diameter d1 of the first through hole 336a. The light emitting unit 422 and the light receiving unit 424 are described below.

According to various embodiments, the electronic device 300 may include a cover window 440. The cover window 440 may form at least a portion of an outer surface of the electronic device 300. For example, the cover window 440 may form at least a portion of the first front surface (e.g., the first front surface 310a of FIG. 2) and the second front surface (e.g., the second front surface 320a of FIG. 2). According to an embodiment, the cover window 440 may be disposed on the display panel 331. The cover window 440 may protect the display panel 331 from the outside. According to various embodiments, the cover window 440 may be provided as a cover layer.

According to various embodiments, the cover window 440 may be formed of various materials. For example, the cover window 440 may be formed of a material that is substantially transparent and flexible. According to an embodiment, the cover window 440 may be formed of ultra-thin glass (UTG). According to another embodiment, the cover window 440 may be formed of a polyimide (colorless polyimide (CPI)) film.

According to various embodiments, the sensor module 420 may be disposed under the display 330. According to an embodiment, the sensor module 420 may be disposed under an area of the display 330 in which the through hole 336 is formed.

According to various embodiments, the sensor module 420 may emit light to the outside of the electronic device 300 through the display 330. The display panel 331 may transmit at least a portion of the light emitted from the sensor module 420. For example, the sensor module 420 may emit light to the outside of the electronic device 300 through the display panel 331 and obtain the emission light through the display panel 331. According to an embodiment, the sensor module 420 may not directly be exposed to the outside of the electronic device 300. For example, the sensor module 420 may be invisible to the user by the display 330 disposed on the sensor module 420.

According to a claimed embodiment, the sensor module 420 includes a light emitting unit 422 configured to emit light to the outside of the electronic device 300 and a light receiving unit 424 configured to receive the light. The light emitting unit 422 may emit light to the outside of the electronic device 300 through a first opening 412a and a first through hole 336a. According to an embodiment, the light receiving unit 424 may obtain light reflected by an object positioned outside the electronic device 300, through a second through hole 336b and a second opening 412b. According to an embodiment, a processor (e.g., the processor 120 of FIG. 1) of the electronic device 300 may determine whether there is a nearby object outside the electronic device 300 based on the light obtained by the light receiving unit 424.

According to a claimed embodiment, the sensor module 420 is disposed corresponding to the through hole 336. For example, when the sensor module 420 is viewed from above the electronic device 300, at least a portion of the sensor module 420 may overlap at least a portion of the through hole 336 formed in the display substrate 332. According to an embodiment, the light emitting unit 422 of the sensor module 420 may overlap at least a portion of the first through hole 336a, and the light receiving unit 424 of the sensor module 420 may overlap at least a portion of the second through hole 336b.

According to various embodiments, the sensor module 420 may include an optical sensor housing 426 in which the light emitting unit 422 and the light receiving unit 424 are disposed. The optical sensor housing 426 may be disposed under the display 330. For example, the optical sensor housing 426 may be disposed between the printed circuit board 350 and the supporting member 410 disposed under the display 330.

According to a claimed embodiment, the supporting member 410 supports the display 330. The supporting member 410 is disposed between the display 330 and the sensor module 420. According to an embodiment, the supporting member 410 may be disposed between the display substrate 332 of the display 330 and the front case 340. For example, the supporting member 410 may be coupled to the front case 340 through a coupling member (e.g., a tape) 450.

According to various embodiments, the supporting member may prevent damage to the display 330. The supporting member 410 is formed of a substantially rigid body, and may restrict bending or sagging of the flexible cover window 440 or the display 330. For example, when an external force is applied to the cover window 440 corresponding to the through hole 336, at least one of the cover window 440 and the display 330 may be bent in the second direction (-Z direction). The supporting member 410 may support the display 330 to prevent the cover window 440 or the display 330 from warping beyond its elastic limit. According to an embodiment, when an external force is applied to the cover window 440 corresponding to the through hole 336, the cover window 440 or the display 330 may warp a fifth distance d5 within the elastic limit range in the second direction (-Z direction). For example, the cover window 440 or the display 330 may warp more than 0 mm and less than or equal to 0.13 mm. According to an embodiment, the fifth distance d5 may be a distance between a first portion (e.g., the first portion 414 of FIG. 8A) of the supporting member 410 and the display 330.

According to various embodiments, the supporting member 410 may be spaced apart from the display substrate 332. According to an embodiment, the supporting member 410 may include a first surface 410a facing at least a portion of the display substrate 332 and a second surface 410b facing at least a portion of the sensor module 420. The first surface 410a may be spaced apart from the display substrate 332 by the fifth distance d5. According to an embodiment, when an external force is applied to the sensor area 324 in which the sensor module 420 is disposed, at least a portion of the display substrate 332 may warp in the second direction (-Z direction), contacting the first surface 410a.

According to various embodiments, the supporting member 410 may be coupled with at least a portion of the display substrate 332. For example, at least one of the adhesive layer 332a, the display supporting layer 332b, the heat dissipation layer 332c, or the cushion layer may be disposed on the first surface 410a of the supporting member 410. According to an embodiment, a second portion 416 of the first surface 410a of the supporting member 410 may be coupled to at least a portion of the display substrate 332, and a first portion 414 of the first surface 410a may be exposed to the outside of the supporting member 410. According to another embodiment, the first portion 414 of the first surface 410a of the supporting member 410 and the second portion 416 of the first surface 410a may be coupled to at least a portion of the display substrate 332.

According to various embodiments, the supporting member 410 may include an opening 412. The opening 412 may guide the light emitted from the sensor module 420. For example, the opening 412 may be formed in a position corresponding to the sensor module 420 to form a path of light emitted from the sensor module 420. According to an embodiment, when the supporting member 410 is viewed from thereabove, the opening 412 and the sensor module 420 may at least partially overlap.

According to a claimed embodiment, there are formed a plurality of openings 412. The opening 412 includes a first opening 412a formed to correspond to the light emitting unit 422 and a second opening 412b formed to correspond to the light receiving unit 424. According to an embodiment, a cross-sectional area of the second opening 412b may be greater than a cross-sectional area of the first opening 412a. For example, a diameter d4 of the second opening 412b may be greater than a diameter d3 of the first opening 412a.

The supporting member 410 may be formed of a rigid body. For example, the supporting member 410 may be formed with a hardness of 1H or more. The supporting member 410 includes stainless steel. For example, the supporting member 410 may be formed of stainless steel (SUS) 304 to prevent magnetization. According to a non-claimed embodiment, the supporting member 410 may include glass.

The electronic device 300 includes a shielding member 430 for reducing crosstalk of the sensor module 420. According to an embodiment, the shielding member 430 may block a path through which the light emitted from the light emitting unit 422 directly comes into the light receiving unit 424. For example, by the shielding member 430, the light emitted from the light emitting unit 422 may be transmitted through the display 330, reflected by an object outside the electronic device 300, and directed toward the light receiving unit 424. The shielding member 430 is disposed between the supporting member 410 and the optical sensor housing 426.

According to various embodiments, the shielding member 430 may be formed of various materials. For example, the shielding member 430 may be formed of a material capable of substantially blocking light. As another example, the shielding member 430 may be formed of an elastic body. According to an embodiment, the shielding member 430 may include at least one of a sponge or rubber.

According to various embodiments, the shielding member 430 may be formed in a structure capable of reducing a gap between the supporting member 410 and the optical sensor housing 426. According to an embodiment, as the distance between the supporting member 410 and the optical sensor housing 426 decreases, the size of the opening 412 may be reduced. For example, the light emitted from the light emitting unit 422 is dispersed to a plane (XY plane) perpendicular to the first direction (+Z direction) in which the light from the light emitting unit 422 is emitted, as it goes away from the light emitting unit 422. Thus, as the distance between the supporting member 410 and the optical sensor housing 426 increases, the opening 412 may increase in size, and the stability of the supporting member 410 supporting the display 330 may reduce. According to an embodiment, the shielding member 430 may be formed to have a thickness greater than 0 mm and less than or equal to 0.1 mm.

According to various embodiments, the electronic device 300 may be formed in a structure capable of preventing burn-in. For example, as the sensor module 420 and the display panel 331 come closer together, burn-in may occur in the display panel 331. Burn-in here may mean a phenomenon in which the display panel 331 is damaged by the heat generated from the sensor module 420 or the light emitted from the sensor module 420, causing a ghost image or discoloration or abnormal color representation. According to an embodiment, the supporting member 410 having a predetermined thickness may be disposed between the display panel 331 and the sensor module 420 to reduce the possibility of burn-in. For example, the thickness of the supporting member 410 in the height direction (Z direction) may be 0.15 mm or more.

According to various embodiments, the supporting member 410 may include a first portion 414 formed between the display substrate 332 and the sensor module 420 and a second portion 416 formed between the display substrate 332 and the front case 340. The first portion 414 may be a portion of the supporting member 410 formed between the first opening 412a and the second opening 412b. According to an embodiment, the first portion 414 may be a portion of the supporting member 410 crossing between the first opening 412a and the second opening 412b. The second portion 416 may be a portion other than the first portion 414 of the supporting member 410. For example, the second portion 416 may be a portion of the outer periphery of the supporting member 410. The shielding member 430 may be disposed on at least a portion of the first portion 414, and the coupling member 450 may be disposed on at least a portion of the second portion 416.

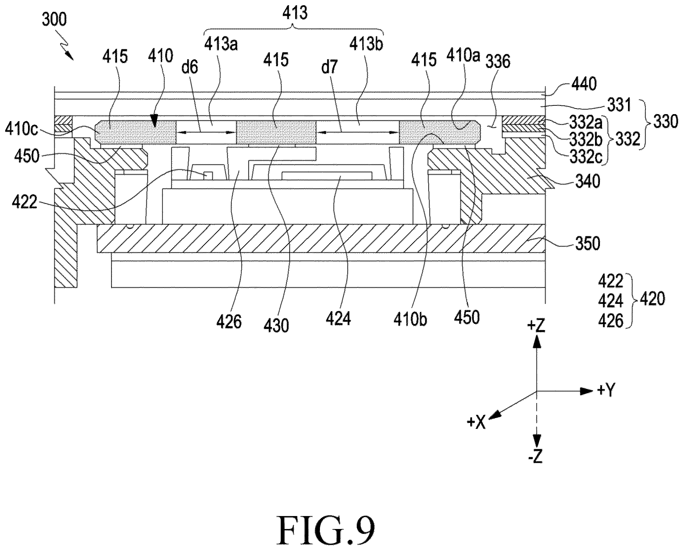

FIG. 9 is a cross-sectional view taken along line A-A' of FIG. 5.

Referring to FIG. 9, the electronic device 300 includes a display 330, a supporting member 410, and a sensor module 420. The configuration of the display 330, the supporting member 410, and the sensor module 420 of FIG. 9 may be identical in whole or part to the configuration of the display 330, the supporting member 410, and the sensor module 420 of FIG. 7.

According to various embodiments, the supporting member 410 may prevent damage to the display 330. For example, when the display 330 is bent by an external force, the supporting member 410 may support the display 330 to prevent the display 330 from warping or sagging.

According to various embodiments, the supporting member 410 may be disposed in at least a portion of the through hole 336 of the display substrate 332. For example, the supporting member 410 may include a first surface 410a facing the display panel 331 and a second surface 410b coupled to the coupling member 450 for coupling to the front case 340. According to an embodiment, when the electronic device 300 is viewed from thereabove, the supporting member 410 may overlap at least a portion of the display panel 331.

According to various embodiments, the supporting member 410 may include a first area 413 for providing a path of light and a second area 415 formed to surround the first area 413. The first area 413 may be formed to be substantially transparent to provide a path of light emitted or transmitted from the sensor module 420 and the light toward the sensor module 420. At least a portion of the second area 415 may include a printed layer for preventing passage of light.

According to various embodiments, the first area 413 may include a plurality of areas. For example, the first area 413 may include a 1-1st area 413a formed to correspond to the light emitting unit 422 and a 1-2nd area 413b formed to correspond to the light receiving unit 424. According to an embodiment, the 1-2nd area 413b may be larger than the 1-1st area 413a. For example, the diameter d7 of the 1-2nd area 413b may be greater than the diameter d6 of the 1-1st area 413a. The diameter d7 of the 1-2nd area 413b and the diameter d6 of the 1-1st area 414a may be a length on a width-direction plane (XY plane) of the electronic device 300.

According to various embodiments, the second area 415 may directly face the display substrate 332. For example, the second area 415 may include a third surface 410c facing at least a portion of the display substrate 332. The third surface 410c may surround at least a portion of the space between the first surface 410a and the second surface 410b. According to an embodiment, the first area 413 may face the display substrate 332 through the second area 415.

The supporting member 410 is formed of a rigid body. According to a non-claimed embodiment, the supporting member 410 may include glass. For example, the supporting member 410 may be formed of substantially transparent glass, and at least a portion of the surface of the supporting member 410 may be coated with a printed layer for preventing the passage of light.

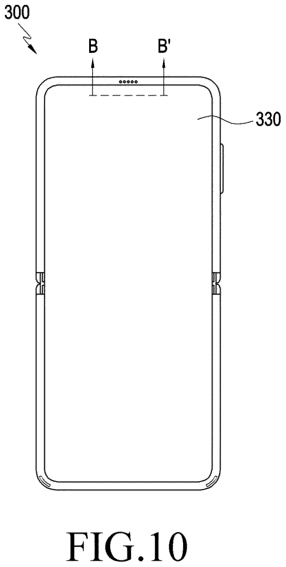

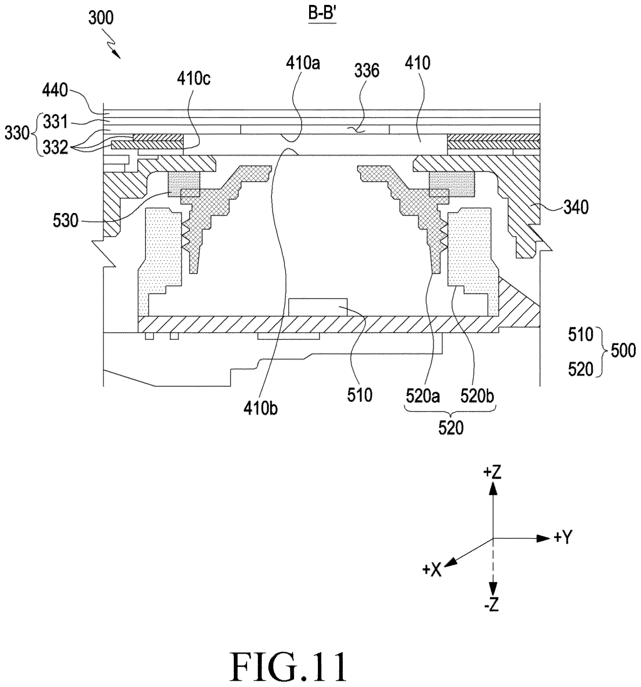

FIG. 10 is another front view illustrating an electronic device according to various embodiments of the disclosure. FIG. 11 is a cross-sectional view taken along line B-B' of FIG. 10.

Referring to FIGS. 10 and 11, the electronic device 300 includes a display 330, a supporting member 410, and a sensor module 500. The configuration of the display 330, the supporting member 410, and the sensor module 500 of FIG. 10 or 11 may be identical in whole or part to the configuration of the display 330, the supporting member 410, and the sensor module 420 of FIGS. 5 to 9.

According to various embodiments, the electronic device 300 includes a sensor module 500 disposed under the display 330. The sensor module 500 may be an under display camera. For example, the sensor module 500 may be disposed under the display panel 331, and may obtain an external image of the electronic device 300 through the display panel 331 and the cover window 440. According to an embodiment, the sensor module 500 may not be exposed to the outside of the electronic device 300. For example, the display 330 may not include a camera opening (e.g., the camera opening 305a of FIG. 6A) in which the camera module (e.g., the camera module 305 of FIG. 5) is disposed.

According to various embodiments, the sensor module 500 may include an image sensor 510 and an optical sensor housing 520. According to an embodiment, the image sensor 510 may obtain an external image of the electronic device 300 through the supporting member 410, the display panel 331, and the cover window 440. According to an embodiment, the optical sensor housing 520 may include a lens barrel 520a and a lens barrel support 520b. The lens barrel 520a may include at least one lens for adjusting the focus of the sensor module 500. The lens barrel support 520b may support the lens barrel 520a.

According to various embodiments, the supporting member 410 is disposed between the display 330 and the sensor module 500. For example, the supporting member 410 may have a first surface 410a facing the display panel 331, a second surface 410b facing at least a portion of the sensor module 500 and coupled to the front case 340, and a third surface 410c facing the display substrate 332. According to an embodiment, the first surface 410a may be a surface of the supporting member 410 facing in a first direction (+Z direction), the second surface 410b may be another surface of the supporting member 410 facing in a second direction (-Z direction), which is opposite to the first direction (+Z direction), and the third surface may be another surface of the supporting member 410, which surrounds the space between the first surface and the second surface.

According to various embodiments, the supporting member 410 may be disposed in at least a portion of the through hole 336 of the display substrate 332. For example, the display substrate 332 may include at least one layer (e.g., the adhesive layer 332a, the display supporting layer 332b, and the display heat dissipation layer 332c of FIG. 7), and the supporting member 410 may be located in a space formed by the through hole 336 of the display substrate 332. According to an embodiment, the supporting member 410 may be disposed on substantially the same plane (XY plane) as at least a portion of the display substrate 332.

According to various embodiments, the electronic device 300 may include an adhesive member 530 for coupling the sensor module 500 to the front case 340. The adhesive member 530 may be formed in various positions. According to an embodiment, the adhesive member 530 may be disposed between the lens barrel 520a and the front case 340. According to another embodiment, the adhesive member 530 may be disposed between the lens barrel support 520b and the front case 340. According to another embodiment, the adhesive member 530 may be disposed in contact with the lens barrel 520a, the lens barrel support 520b, and the front case 340.

According to various embodiments, the adhesive member 530 may be formed of various materials. According to an embodiment, the adhesive member 530 may be formed of a material that is cured when a predetermined condition is met. For example, the adhesive member 530 in a liquid state may be changed to a solid state when a predetermined condition is met. The adhesive member 530 may include at least one of polyurethane, silicone, and epoxy resin. The predetermined condition may be a condition in which one of ultraviolet (UV) curing, natural curing, or hot air curing is applied to the adhesive member 530 in a liquid state.

The electronic device (e.g., the electronic device 101 of FIG. 1) includes a flexible display 330 including a display panel 331 and a display substrate 332 disposed under the display panel and having a through hole 336, a supporting member 410 disposed under the flexible display, and a camera module 500 including a camera housing 520 disposed under the supporting member and an image sensor 510 configured to obtain an image through the display panel and the supporting member.

According to various embodiments, the supporting member may include a first surface 410a facing the display panel, a second surface 410b formed to face away from the first surface and facing the camera module, and a third surface 410c surrounding at least a portion of a space between the first surface and the second surface and facing the display substrate.

According to various embodiments of the disclosure, an electronic device (e.g., the electronic device 101 of FIG. 1) may comprise a flexible display (e.g., the display 330 of FIG. 4) including a display panel (e.g., the display panel 331 of FIG. 7) and a display substrate (e.g., the display substrate 332 of FIG. 7) disposed under the display panel and having at least one through hole (e.g., the through hole 336 of FIG. 7), at least one sensor module (e.g., the sensor module 420 of FIG. 7) disposed under the flexible display, and a supporting member (e.g., the supporting member 410 of FIG. 4) disposed between the flexible display and the at least one sensor module and having an opening (e.g., the opening 412 of FIG. 7) corresponding to at least a portion of the through hole.

The electronic device further comprises a shielding member (e.g., the shielding member 430 of FIG. 7) disposed between the at least one sensor module and the supporting member.

The least one sensor module includes a light emitting unit (e.g., the light emitting unit 422 of FIG. 7) configured to emit light to an outside of the electronic device, a light receiving unit (e.g., the light receiving unit 424 of FIG. 7) configured to receive the light, and an optical sensor housing (e.g., the optical sensor housing 426 of FIG. 7) in which the light emitting unit and the light receiving unit are disposed.

The through hole includes a first through hole (e.g., the first through hole 336a of FIG. 7) corresponding to the light emitting unit and a second through hole (e.g., the second through hole 336b of FIG. 7) corresponding to the light receiving unit. The opening includes a first opening (e.g., the first opening 412a of FIG. 7) corresponding to the light emitting unit and a second opening (e.g., the second opening 412 of FIG. 7) corresponding to the light receiving unit.

According to various embodiments, the first through hole may be larger in cross-sectional area than the first opening, and the second through hole may be larger in cross-sectional area than the second opening.

According to various embodiments, the second opening may be larger in cross-sectional area than the first opening.

According to various embodiments, the electronic device may further comprise a front case (e.g., the front case 340 of FIG. 4) supporting the flexible display. The supporting member may include a first portion (e.g., the first portion 414 of FIG. 8A) formed between the display substrate and the at least one sensor module and a second portion (e.g., the second portion 416 of FIG. 8A) formed between the display substrate and the front case. The shielding member may be disposed on the first portion.

According to various embodiments, the electronic device may further comprise a coupling member (e.g., the coupling member 450 of FIG. 7) disposed between the front case and the supporting member. The coupling member may be disposed on the second portion.

According to various embodiments, the supporting member may include a first surface (e.g., the first surface 410a of FIG. 7) facing at least a portion of the display substrate and a second surface (e.g., the second surface 410b of FIG. 7) facing the at least one sensor module. The shielding member and the coupling member may be disposed on the second surface.

According to various embodiments, the first surface may be spaced apart from the display substrate.

According to a claimed embodiment, the supporting member includes stainless steel.

According to various embodiments, the display substrate may include a supporting layer (e.g., the supporting layer 332b of FIG. 7) supporting the display panel and an adhesive layer (e.g., the adhesive layer 332a of FIG. 7) coupling the display panel with the supporting layer.

According to various embodiments, the electronic device may further comprise a cover window (e.g., the cover window 440 of FIG. 7) disposed on the display. The cover window may be formed of an ultra thin film tempered glass or a transparent polyimide film.

According to various embodiments of the disclosure, an electronic device (e.g., the electronic device 101 of FIG. 1) comprises a flexible display (e.g., the display 330 of FIG. 9) including a display panel (e.g., the display panel 331 of FIG. 9) and a display substrate (e.g., the display substrate 332 of FIG. 9) disposed under the display panel and having at least one through hole (e.g., the through hole 336 of FIG. 9), a sensor module (e.g., the sensor module 420 of FIG. 9) disposed under the display panel, and a supporting member (e.g., the supporting member 410 of FIG. 9) disposed in at least a portion of the through hole and having a first area (e.g., the first area 413 of FIG. 9) for providing a path of light transmitted from the sensor module or directed to the sensor module and a second area (e.g., the second area 415 of FIG. 9) formed to surround the first area.

The electronic device further comprises a shielding member (e.g., the shielding member 430 of FIG. 9) disposed between the at least one sensor module and the supporting member.

According to various embodiments, the supporting member may include a first surface (e.g., the first surface 410a of FIG. 9) facing at least a portion of the display panel, a second surface (e.g., the second surface 410b of FIG. 9) facing at least a portion of the sensor module, and a third surface (e.g., the third surface 410c of FIG. 9) surrounding at least a portion of a space between the first surface and the second surface and facing at least a portion of the display substrate. The shielding member may be disposed on the second surface of the second area.

The sensor module includes a light emitting unit (e.g., the light emitting unit 422 of FIG. 9) configured to emit light, a light receiving unit (e.g., the light receiving unit 424 of FIG. 9) configured to receive the light emitted from the light emitting unit, and an optical sensor housing (e.g., the optical sensor housing 426 of FIG. 9) in which the light emitting unit and the light receiving unit are disposed.

According to various embodiments, the first area may include a 1-1st area (e.g., the 1-1st area 413a of FIG. 9) corresponding to the light emitting unit and a 1-2nd th area (e.g., the 1-2nd area 413b in FIG. 9) corresponding to the light receiving unit.

According to various embodiments, the electronic device may further comprise a front case (e.g., the front case 340 of FIG. 9) supporting the flexible display. The supporting member may be disposed on the front case.

According to non-claimed embodiments, the supporting member may be formed of glass. A printed layer may be formed in the second area to block light.

According to various embodiments of the disclosure, an electronic device (e.g., the electronic device 101 of FIG. 1) may comprise a housing (e.g., the housing 301 of FIG. 2) including a cover layer (e.g., the cover window 440 of FIG. 7) facing in a first direction (e.g., the first direction (+Z direction) of FIG. 7) and a rear cover (e.g., the first rear cover 380 or second rear cover 390 of FIG. 3) facing in a second direction (e.g., the second direction (-Z direction) of FIG. 7) opposite to the first direction, a display (e.g., the display 330 of FIG. 2) visible through the cover layer and including a panel layer (e.g., the display panel 331 of FIG. 7) disposed to face in the first direction and a protection layer (e.g., the display substrate 332 of FIG. 7) having at least one through hole (e.g., the through hole 336 of FIG. 7), a printed circuit board (e.g., the printed circuit board 350 of FIG. 7) disposed between the display and the rear cover, at least one sensor module (e.g., the sensor module 420 of FIG. 7) disposed on the printed circuit board to face in the first direction, and a supporting member (e.g., the supporting member 410 of FIG. 7) disposed between the display and the sensor module and including an opening (e.g., the opening 412 of FIG. 7) formed to overlap at least a portion of the through hole.

It is apparent to one of ordinary skill in the art that an electronic device including various supporting members as described above are not limited to the above-described embodiments and those shown in the drawings, and various changes, modifications, or alterations may be made thereto without departing from the scope of the present invention.

## Claims

1. An electronic device, comprising:
a foldable flexible display (330) including a display panel and a display substrate disposed under the display panel and having through holes (336);
at least one sensor module (420), which is disposed under the foldable flexible display (330), including a light emitting unit (422) and a light receiving unit (424);
a supporting member (410) formed of a rigid body and disposed between the foldable flexible display (330) and the at least one sensor module (420), the supporting member (410) having openings (412) corresponding to at least a portion of the through holes (336) and including a stainless steel as the rigid body,
a shielding member (430) formed of an elastic body and disposed between the at least one sensor module (420) and the supporting member (410), the shielding member configured for blocking a path through which light emitted from the light emitting unit (422) directly comes into the light receiving unit (424),
wherein the through holes (336) include a first through hole (336a) corresponding to the light emitting unit (422) and a second through hole (336b) corresponding the light receiving unit (424), and
wherein the openings (412) include a first opening (412a) corresponding to the light emitting unit (422) and a second opening (412b) corresponding to the light receiving unit (424).

2. The electronic device of claim 1, wherein the at least one sensor module includes the light emitting unit configured to emit light to an outside of the electronic device, the light receiving unit configured to receive the light, and an optical sensor housing in which the light emitting unit and the light receiving unit are disposed.

3. The electronic device of claim 1, wherein the first through hole is larger in cross-sectional area than the first opening, and the second through hole is larger in cross-sectional area than the second opening.

4. The electronic device of claim 1, wherein the second opening is larger in cross-sectional area than the first opening.

5. The electronic device of claim 1, further comprising a front case supporting the foldable flexible display,
wherein the supporting member includes a first portion formed between the display substrate and the at least one sensor module and a second portion formed between the display substrate and the front case, and
wherein the shielding member is disposed on the first portion.

6. The electronic device of claim 5, further comprising a coupling member disposed between the front case and the supporting member,
wherein the coupling member is disposed on the second portion.

7. The electronic device of claim 6, wherein the supporting member includes a first surface facing at least a portion of the display substrate and a second surface facing the at least one sensor module, and
wherein the shielding member and the coupling member are disposed on the second surface.

8. The electronic device of claim 7, wherein the first surface is spaced apart from the display substrate.

9. The electronic device of claim 1, wherein the display substrate includes a supporting layer supporting the display panel and an adhesive layer coupling the display panel with the supporting layer.

10. The electronic device of claim 1, further comprising a cover window disposed on the display,
wherein the cover window is formed of an ultra thin film tempered glass or a transparent polyimide film.

11. The electronic device of claim 1, wherein the supporting member includes a first area for providing a path of light transmitted from the at least one sensor module or directed to the at least one sensor module and a second area formed to surround the first area.

12. The electronic device of claim 1, further comprising:
a housing including a cover layer facing in a first direction and a rear cover facing in a second direction opposite to the first direction; and
a printed circuit board disposed between the foldable flexible display and the rear cover,
wherein the display is visually exposed to an outside of the electronic device through the cover layer, and
wherein the at least one sensor module is disposed on the printed circuit board to face in the first direction.

## Patentansprüche

1. Elektronische Vorrichtung, umfassend:
eine faltbare flexible Anzeige (330), umfassend eine Anzeigetafel und ein Anzeigesubstrat, das unter der Anzeigetafel angeordnet ist und Durchgangslöcher (336) aufweist;
mindestens ein Sensormodul (420), das unter der faltbaren flexiblen Anzeige (330) angeordnet ist und eine Lichtemissionseinheit (422) und eine Lichtempfangseinheit (424) umfasst;
ein Trägerelement (410), das aus einem starren Körper gebildet und zwischen der faltbaren flexiblen Anzeige (330) und dem mindestens einen Sensormodul (420) angeordnet ist, wobei das Trägerelement (410) Öffnungen (412) aufweist, die mindestens einem Abschnitt der Durchgangslöcher (336) entsprechen, und einen rostfreien Stahl als den starren Körper enthält,
ein Abschirmelement (430), das aus einem elastischen Körper gebildet und zwischen dem mindestens einen Sensormodul (420) und dem Trägerelement (410) angeordnet ist, wobei das Abschirmelement so konfiguriert ist, dass es einen Weg blockiert, durch den von der Lichtemissionseinheit (422) emittiertes Licht direkt in die Lichtempfangseinheit (424) gelangt,
wobei die Durchgangslöcher (336) ein erstes Durchgangsloch (336a), das der Lichtemissionseinheit (422) entspricht, und ein zweites Durchgangsloch (336b), das der Lichtempfangseinheit (424) entspricht, umfassen, und
wobei die Öffnungen (412) eine erste Öffnung (412a), die der Lichtemissionseinheit (422) entspricht, und eine zweite Öffnung (412b), die der Lichtempfangseinheit (424) entspricht, umfassen.

2. Elektronische Vorrichtung nach Anspruch 1, wobei das mindestens eine Sensormodul die Lichtemissionseinheit, die so konfiguriert ist, dass sie Licht zur Außenseite der elektronischen Vorrichtung emittiert, die Lichtempfangseinheit, die so konfiguriert ist, dass sie das Licht empfängt, und ein optisches Sensorgehäuse umfasst, in dem die Lichtemissionseinheit und die Lichtempfangseinheit angeordnet sind.

3. Elektronische Vorrichtung nach Anspruch 1, wobei das erste Durchgangsloch eine größere Querschnittsfläche aufweist als die erste Öffnung und das zweite Durchgangsloch eine größere Querschnittsfläche aufweist als die zweite Öffnung.

4. Elektronische Vorrichtung nach Anspruch 1, wobei die zweite Öffnung eine größere Querschnittsfläche aufweist als die erste Öffnung.

5. Elektronische Vorrichtung nach Anspruch 1, die ferner ein vorderes Gehäuse umfasst, das die faltbare flexible Anzeige trägt,
wobei das Trägerelement einen ersten Abschnitt, der zwischen dem Anzeigesubstrat und dem mindestens einen Sensormodul ausgebildet ist, und einen zweiten Abschnitt, der zwischen dem Anzeigesubstrat und dem vorderen Gehäuse ausgebildet ist, aufweist, und
wobei das Abschirmelement auf dem ersten Abschnitt angeordnet ist.

6. Elektronische Vorrichtung nach Anspruch 5, die ferner ein Kopplungselement umfasst, das zwischen dem vorderen Gehäuse und dem Trägerelement angeordnet ist,
wobei das Kopplungselement auf dem zweiten Abschnitt angeordnet ist.

7. Elektronische Vorrichtung nach Anspruch 6, wobei das Trägerelement eine erste Oberfläche, die mindestens einem Abschnitt des Anzeigesubstrats zugewandt ist, und eine zweite Oberfläche, die dem mindestens einen Sensormodul zugewandt ist, aufweist, und
wobei das Abschirmelement und das Kopplungselement auf der zweiten Oberfläche angeordnet sind.

8. Elektronische Vorrichtung nach Anspruch 7, wobei die erste Oberfläche von dem Anzeigesubstrat beabstandet ist.

9. Elektronische Vorrichtung nach Anspruch 1, wobei das Anzeigesubstrat eine Trägerschicht, die die Anzeigetafel trägt, und eine Klebeschicht, die die Anzeigetafel mit der Trägerschicht verbindet, enthält.

10. Elektronische Vorrichtung nach Anspruch 1, die ferner ein Abdeckfenster enthält, das auf der Anzeige angeordnet ist,
wobei das Abdeckfenster aus einem gehärtetem Glas mit einem ultradünnen Film oder einem transparenten Polyimidfilm besteht.

11. Elektronische Vorrichtung nach Anspruch 1, wobei das Trägerelement einen ersten Bereich zur Bereitstellung eines Lichtweges, der von dem mindestens einen Sensormodul übertragen oder auf das mindestens eine Sensormodul gerichtet wird, und einen zweiten Bereich, der so ausgebildet ist, dass er den ersten Bereich umgibt, umfasst.

12. Elektronische Vorrichtung nach Anspruch 1, ferner umfassend:
ein Gehäuse, das ein Fenster, das in eine erste Richtung weist, und eine hintere Abdeckung (120), die in eine zweite Richtung weist, die der ersten Richtung entgegengesetzt ist, enthält;
eine Leiterplatte, die zwischen der faltbaren flexiblen Anzeige und der hinteren Abdeckung angeordnet ist,
wobei die Anzeige durch die Abdeckschicht visuell zur Außenseite der elektronischen Vorrichtung exponiert ist, und
wobei das mindestens eine Sensormodul auf der Leiterplatte so angeordnet ist, dass es in die erste Richtung weist.

## Revendications

1. Dispositif électronique comprenant :
un affichage flexible pliable (330) comprenant un panneau d'affichage et un substrat d'affichage disposé sous le panneau d'affichage et comportant des trous de passage (336) ;
au moins un module de capteur (420), disposé sous l'affichage flexible pliable (330), comprenant une unité d'émission de lumière (422) et une unité de réception de lumière (424) ;
un élément de support (410) formé d'un corps rigide et disposé entre l'affichage flexible pliable (330) et l'au moins un module de capteur (420), l'élément de support (410) ayant des ouvertures (412) correspondant à au moins une partie des trous de passage (336) et comprenant un acier inoxydable en tant que corps rigide,
un élément de blindage (430) formé d'un corps élastique et disposé entre l'au moins un module de capteur (420) et l'élément de support (410), l'élément de blindage étant configuré pour bloquer un chemin par lequel la lumière émise par l'unité d'émission de lumière (422) arrive directement dans l'unité de réception de lumière (424),
dans lequel les trous de passage (336) comprennent un premier trou de passage (336a) correspondant à l'unité d'émission de lumière (422) et un deuxième trou de passage (336b) correspondant à l'unité de réception de lumière (424), et
les ouvertures (412) comprennent une première ouverture (412a) correspondant à l'unité d'émission de lumière (422) et une deuxième ouverture (412b) correspondant à l'unité de réception de lumière (424).

2. Dispositif électronique de la revendication 1, dans lequel l'au moins un module de capteur comprend l'unité d'émission de lumière configurée pour émettre de la lumière vers l'extérieur du dispositif électronique, l'unité de réception de lumière configurée pour recevoir la lumière, et un boîtier de capteur optique dans lequel l'unité d'émission de lumière et l'unité de réception de lumière sont disposées.

3. Dispositif électronique de la revendication 1, dans lequel le premier trou de passage est plus grand en section transversale que la première ouverture, et le deuxième trou de passage est plus grand en section transversale que la deuxième ouverture.

4. Dispositif électronique de la revendication 1, dans lequel la deuxième ouverture a une section transversale supérieure à celle de la première ouverture.

5. Dispositif électronique de la revendication 1, comprenant en outre un boîtier avant supportant l'affichage flexible pliable ,
dans lequel l'élément de support comprend une première partie formée entre le substrat d'affichage et l'au moins un module de capteur et une deuxième partie formée entre le substrat d'affichage et le boîtier avant, et
dans lequel l'élément de blindage est disposé sur la première partie.

6. Dispositif électronique de la revendication 5, comprenant en outre un élément de couplage disposé entre le boîtier avant et l'élément de support,
dans lequel l'élément de couplage est disposé sur la deuxième partie.

7. Dispositif électronique de la revendication 6, dans lequel l'élément de support comprend une première surface faisant face à au moins une partie du substrat d'affichage et une deuxième surface faisant face à l'au moins un module de capteur, et
dans lequel l'élément de blindage et l'élément de couplage sont disposés sur la deuxième surface.

8. Dispositif électronique de la revendication 7, dans lequel la première surface est espacée du substrat d'affichage.

9. Dispositif électronique de la revendication 1, dans lequel le substrat d'affichage comprend une couche de support soutenant le panneau d'affichage et une couche adhésive reliant le panneau d'affichage à la couche de support.

10. Dispositif électronique de la revendication 1, comprenant en outre une fenêtre de couverture disposée sur l'affichage,
dans lequel la fenêtre de couverture est formée d'un verre trempé à film ultrafin ou d'un film polyimide transparent.

11. Dispositif électronique de la revendication 1, dans lequel l'élément de support comprend une première zone pour fournir un chemin de lumière transmis à partir de l'au moins un module de capteur ou dirigé vers l'au moins un module de capteur et une deuxième zone formée pour entourer la première zone.

12. Dispositif électronique de la revendication 1, comprenant en outre :
un boîtier comprenant une couche de couverture orientée dans une première direction et une couverture arrière (120) orientée dans une deuxième direction opposée à la première direction ;
une carte de circuit imprimé disposée entre l'affichage flexible pliable et la couverture arrière,
dans lequel l'affichage est visuellement exposé à l'extérieur du dispositif électronique à travers la couche de couverture, et
dans lequel l'au moins un module de capteur est disposé sur la carte de circuit imprimé de manière à faire face à la première direction.
